# FASCICULE DE BREVET EUROPEEN

(11) **EP 0 972 222 B1**
(45) Date de publication et mention de la délivrance du brevet: **20.03.2002**
(21) Numéro de dépôt: 98917282.0
(22) Date de dépôt: 01.04.1998
(51) Int. Cl.: G02C 5/22

(54) **CHARNIERE EXTENSIBLE EXTRA-PLATE**
EXTRAFLACHES UEBERDEHNBARES SCHARNIER
EXTRA-FLAT EXPANDABLE HINGE

(30) Priorité: 02.04.1997 FR 9703982
(43) Date de publication de la demande: 19.01.2000
(73) Titulaire: Chene, Richard, 92200 Neuilly-sur-Seine (FR); Delamour, Dominique, 78490 Les Mesnuls (FR); Rodi, Olivier, 78650 Saulx-Marchais (FR)
(72) Inventeur: Chene, Richard, 92200 Neuilly-sur-Seine (FR); Delamour, Dominique, 78490 Les Mesnuls (FR); Rodi, Olivier, 78650 Saulx-Marchais (FR)
(74) Mandataire: Sauvage, Renée
(86) Numéro de dépôt international: FR9800656
(87) Numéro de publication internationale: WO9844379

(56) Documents cités:
- EP-A- 0 115 826
- DE-A- 1 807 186
- FR-A- 2 542 099
- FR-A- 2 703 477

## Description

La présente invention concerne une charnière extensible, et plus particulièrement une charnière de lunettes.

Les charnières extensibles ou élastiques connues intègrent en général deux éléments rigides dont les extrémités en vis-à-vis ont une configuration appariée et présentent éventuellement une surface extérieure créant un effet de came au niveau des faces d'appui, lesquels éléments sont articulés l'un à l'autre autour d'un point de pivotement et reliés l'un à l'autre par un ressort de compression hélicoïdal qui exerce une fonction de rappel des éléments rigides l'un vers l'autre et de maintien de ces éléments dans une ou plusieurs positions stables. Lorsqu'elles sont par exemple appliquées à une monture de lunettes, les charnières du type précité autorisent parfois une sur-ouverture des branches au-delà de la position d'ouverture stable -dans laquelle les branches forment un angle sensiblement égal à 93° avec la face avant de la monture, de manière à faciliter la mise en place de la monture sur le visage du porteur.

Ces dernières années, de nombreuses recherches effectuées sur ce type de charnières ont visé à réduire autant que possible leur encombrement, en particulier en hauteur, afin de pouvoir les intégrer aux montures, de plus en plus légères, que l'on trouve désormais dans le commerce. Ces recherches ont conduit à une miniaturisation des ressorts qui, bien qu'elle ait donné des résultats satisfaisants, atteint aujourd'hui un seuil, la réduction de la taille des spires étant limitée par le diamètre de l'axe qui doit les traverser.

Les récents développements des charnières élastiques ont donc conduit à une substitution des ressorts hélicoïdaux par une lame en un matériau élastique, tel que du polyuréthanne, ou par un ressort à lame. Les progrès réalisés, en terme d'encombrement, n'ont toutefois pas été significatifs, dans la mesure où la réduction de l'encombrement de ces charnières s'accompagne nécessairement d'une diminution de la hauteur des faces d'appui des éléments rigides, entraînant ainsi une usure énorme qui ne permet plus de garantir un fonctionnement fiable de la charnière.

Ainsi, la demande de brevet EP-A-0 115 826 divulgue une charnière élastique pour branche de lunettes dans laquelle la branche est connectée à une poche montée pivotante, autour d'une vis, sur une tête formant came qui est elle-même solidaire de la face avant de la monture. La poche renferme un ressort à lame, constitué d'un empilement de trois lames en forme de losange, qui est maintenu par blocage dans celle-ci par l'une de ses extrémités et dont l'autre extrémité est destinée à venir en appui contre l'une ou l'autre de deux surfaces perpendiculaires de ladite came pour définir deux positions stables, respectivement ouverte et fermée, de la branche. La charnière divulguée autorise en outre une légère sur-ouverture de la branche, qui est limitée par des moyens formant butée. Un dispositif fonctionnant sur le même principe est divulgué dans EP-A-0 235 780. Ce dispositif intègre en outre une vis de réglage de la tension initiale du ressort, lequel présente, dans cette demande de brevet, une section transversale circulaire à extrémités tronconiques.

Dans ces deux dispositifs connus, la tête formant came présente des surfaces d'appui tellement réduites que le dispositif ne peut supporter, sans déformation, l'application de contraintes très légèrement supérieures à celles qu'il subit normalement en cours d'utilisation, et en particulier de contraintes appliquées perpendiculairement au plan normal d'articulation de la charnière, sauf à augmenter la hauteur de l'élément formant came, ce qui va à l'encontre du but poursuivi. De plus, ces dispositifs nécessitent des vis de réglage et/ou de fixation. Par suite, les charnières élastiques connues qui utilisent des ressorts à lame ne sont pas adaptées aux contraintes actuelles du marché de la lunetterie, imposées à la fois par les fabricants en ce qui concerne la charge minimale que les montures doivent pouvoir supporter sans déformation, et par les utilisateurs soucieux de l'aspect esthétique de la monture.

De son côté, le brevet français n° 1 593 112 au nom de Mari divulgue une charnière à encliquetage élastique pour monture de lunettes qui comprend un axe à section carrée autour duquel est susceptible de pivoter un siège à profil à arêtes monté dans une branche de lunettes. Il est prévu deux positions stables de la branche. De plus, le siège est pourvu d'une fente longitudinale qui lui confère une certaine élasticité et autorise un rappel élastique de la branche en position d'ouverture normale après qu'elle ait été écartée légèrement au-delà de l'orientation perpendiculaire à la face.

La charnière connue ne présente pas les inconvénients des dispositifs mentionnés ci-dessus. Toutefois, elle nécessite, de par sa conception, un interstice entre la branche et la face avant de la monture, dans lequel sont susceptibles de se loger des salissures. Cet interstice est par ailleurs inesthétique, de même que le siège apparent. De plus, une légère traction sur la branche dans la direction de l'oreille du porteur suffit à déboîter la charnière. Enfin, l'effet de rappel élastique en position ouverte nécessite de surmonter les forces de frottement -induisant elles-mêmes une usure de la charnière- exercées par le siège sur l'axe de section carrée et, compte tenu de la configuration de l'axe, cet effet peut conduire, au-delà d'un certain angle de pivotement de la branche, à amener celle-ci jusqu'en une position située dans le prolongement de la face de la monture.

L'invention vise donc à remédier aux inconvénients de l'art antérieur.

Plus précisément, un but de l'invention est de proposer une nouvelle charnière extensible qui offre un encombrement minimal, en particulier en hauteur, sans pour autant affecter négativement la résistance à la rupture de ladite charnière, en particulier lors de l'application de contraintes perpendiculaires à son plan normal d'articulation ou sous l'effet d'une traction exercée le long de la branche.

Un autre but de l'invention est de proposer une charnière extensible ne présentant pas de vis apparente ni d'éléments de liaison et/ou de rappel apparents.

Un autre but de l'invention est de proposer une charnière extensible qui présente des coûts de fabrication réduits par rapport aux charnières de l'art antérieur.

Ces buts sont atteints par la présente invention en ce sens qu'elle propose une charnière comprenant, d'une manière connue en soi, et en particulier d'après FR-A-2 703 477, un premier élément rigide monté pivotant, autour d'une broche, sur un second élément rigide, ledit premier élément renfermant des moyens élastiques, constitués par au moins une lame élastique, qui sont adaptés à coopérer avec un élément à surface de came solidaire dudit second élément, ou d'un seul tenant avec celui-ci, pour définir des positions angulaires relatives stables desdits éléments rigides.

La charnière selon l'invention se différencie toutefois des charnières connues en ce qu'une extrémité dudit premier élément rigide est reliée à, ou constituée par, une partie formant charnon qui est insérée entre une paire de charnons formant l'extrémité dudit second élément rigide avec enfilage de ladite broche dans l'ensemble desdits charnons, un manchon étant interposé entre un charnon dudit second élément rigide et ladite broche, lequel manchon définit, d'une part, un passage cylindrique adapté à recevoir ladite broche et, d'autre part, une surface périphérique extérieure constituant ladite surface de came et contre laquelle au moins une partie desdits moyens élastiques, dite "partie enserrante", est adaptée à être ajustée.

La partie enserrante des moyens élastiques peut avoir, par exemple, sensiblement la forme d'un Y ou sensiblement la forme d'un crochet plat. En outre, les moyens élastiques peuvent être formés d'une lame élastique unique ou de plusieurs lames élastiques superposées et/ou disposées côte à côte, qui sont orientées de telle manière que leur dimension la plus petite, en section transversale, s'étend dans un plan perpendiculaire au plan normal d'articulation des deux éléments rigides. Pour réduire au minimum l'encombrement de la charnière, la plus petite dimension des moyens élastiques sera par exemple d'environ 0,4 mm, de manière à obtenir une charnière ayant une hauteur totale n'excédant pas environ 2 mm.

De préférence, les positions angulaires relatives stables des éléments rigides seront obtenues par coopération d'au moins un évidement prévu sur ladite surface de came avec au moins une protubérance appariée prévue à une extrémité de ladite partie enserrante des moyens élastiques. Le nombre de protubérances et d'évidements appariés, assurant le maintien en position stable d'un élément rigide par rapport à l'autre n'est pas limitatif et dépendra de l'utilisation à laquelle la charnière selon l'invention est destinée. En variante et/ou en plus, le maintien de la branche en positions ouverte et fermée pourrait être plutôt obtenu par un effet de "pincement" du manchon par la partie enserrante des moyens élastiques. Dans ce cas, les évidements et les protubérances ne seraient pas nécessairement exactement appariés.

Selon une première forme d'exécution de l'invention, la partie formant charnon est constituée par une extrémité dudit premier élément rigide. Dans ce cas, les moyens élastiques ont de préférence sensiblement la forme d'un Y dont les deux branches forment ladite partie enserrante desdits moyens élastiques. Avantageusement, les moyens élastiques comprennent en outre un élément de rappel formé d'une troisième branche, d'un seul tenant avec lesdites deux branches et adjacente à celles-ci dans ledit plan normal d'articulation, laquelle troisième branche est adaptée à venir en butée élastique contre ledit second élément rigide.

Selon une seconde forme d'exécution de l'invention, ladite partie formant charnon du premier élément rigide est constituée par une autre partie, dite "partie encerclante", formée d'un seul tenant avec les moyens élastiques.

Dans ce cas, les moyens élastiques comprennent avantageusement en outre un élément de rappel en forme de crochet plat, présentant une extrémité recourbée retroussée qui est adaptée à venir en butée élastique contre ledit second élément rigide. L'élément de rappel peut être un élément séparé qui est superposé à ladite partie encerclante desdits moyens élastiques. En variante, il peut être constitué par une portion entourant la partie encerclante des moyens élastiques, dans le plan normal de l'articulation.

On comprend que la structure particulière de la charnière selon l'invention, en particulier la coopération des charnons et l'ajustement étroit de la partie enserrante des moyens élastiques autour du manchon, confère à la charnière une bonne résistance aux contraintes, qui lui sont éventuellement appliquées dans plusieurs plans. En outre, il est évident que, en raison de la suppression des faces d'appui sur la surface extérieure du second élément rigide, celui-ci pourra avantageusement être constitué d'un matériau couramment usité, tel que du maillechort ou du titane, des matériaux plus coûteux, aptes à supporter une charge élevée en cisaillement, tels que de l'acier traité, étant réservés au manchon décrit précédemment.

L'invention concerne également des applications de la charnière décrite ci-dessus. Celle-ci trouve son application la plus intéressante comme charnière de monture de lunettes, dans laquelle l'un des éléments rigides est monté sur, ou constitué par, une branche de lunettes et l'autre élément est une pièce rigide solidaire de la face avant de ladite monture de lunettes, communément désignée par "tenon". La charnière selon l'invention pourra en variante être utilisée dans l'articulation d'une porte, telle qu'une porte de réfrigérateur ou une portière de véhicule, à un bâti. Il est bien entendu toutefois que ces applications ne sont pas limitatives, d'autres types d'articulation bien connus de l'homme du métier pouvant être équipés de la charnière précitée.

L'invention sera maintenant décrite avec davantage de détails par référence à la description suivante, prise en combinaison avec les dessins annexés dans lesquels :
la figure 1 est une vue schématique du dessous, en perspective éclatée, d'une charnière selon une première forme d'exécution de l'invention ;
les figures 2 à 4 sont des vues schématiques du dessous, en coupe partielle, d'éléments d'une charnière selon une variante de la première forme d'exécution de l'invention, appliquée à une monture de lunettes, et illustrant respectivement les positions de fermeture, d'ouverture et de sur-ouverture des branches de lunettes ;
la figure 5 est une vue schématique éclatée, en perspective du dessus et en coupe partielle, d'une charnière selon une seconde forme d'exécution de l'invention ;
la figure 6 est une vue schématique éclatée, en perspective du dessus, d'une charnière selon une variante de la forme d'exécution de la figure 5 ;
la figure 7 est une vue schématique éclatée, en perspective du dessus, d'une charnière selon une autre variante de la forme d'exécution de la figure 5 ; et
les figures 8A à 8C sont des vues schématiques du dessus illustrant le fonctionnement de la charnière de la figure 7.

Dans le cadre de cette description, le terme "hauteur" se réfère à une dimension mesurée dans le sens de la hauteur des branches de lunettes, considérées dans leur utilisation normale par un porteur. En outre, l'expression "angle de sur-ouverture" se réfère à la différence entre l'angle obtus que forme la branche avec la face avant de la monture de lunettes en position d'ouverture outrepassée maximale et l'angle (d'environ 93°) que forme la branche avec la face avant de la monture en position d'ouverture normale.

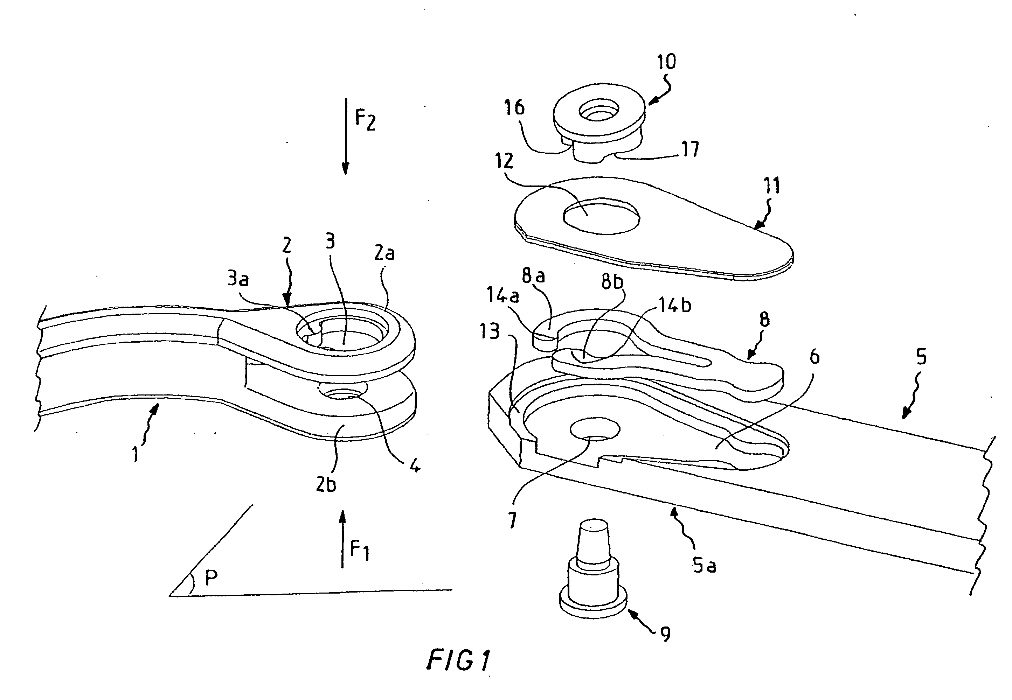

Si l'on se réfère tout d'abord à la figure 1, on voit une charnière selon l'invention, appliquée à une monture de lunettes comprenant, d'une manière connue en soi, un élément rigide 1, généralement désigné par tenon, qui est destiné à être fixé à la face avant de la monture par une première extrémité (non représentée). Le tenon 1 pourra être vissé et/ou soudé à la face avant de la monture, éventuellement après avoir été plié pour ajuster sa courbure à celle de la face avant. Dans la forme d'exécution représentée, l'extrémité 2 du tenon 1 opposée à sa première extrémité présente deux lobes plans 2a, 2b, situés dans des plans parallèles entre eux et au plan d'articulation normal P de la charnière. Un trou débouchant sensiblement circulaire 3, dont la périphérie définit deux saillies telles que 3a, est ménagé dans le lobe 2a, tandis qu'un trou circulaire débouchant 4, de plus petit diamètre, est ménagé dans le lobe 2b. Les lobes 2a et 2b forment les charnons de l'élément rigide 1.

L'autre élément rigide de la charnière est constitué par une branche de lunettes 5. Comme on le voit sur la figure 1, la branche 5 présente, au niveau de son extrémité Sa, un trou débouchant 7 de même diamètre que le trou 4, de sorte que ladite extrémité Sa constitue le charnon de la branche 5. Plus précisément, le trou 7 est pratiqué dans le fond d'un évidement 6 en forme de triangle isocèle curviligne ménagé dans l'épaisseur de la branche 5.

Le charnon 5a de la branche 5 est adapté à être inséré entre les deux charnons 2a et 2b du tenon 1, le tenon 1 et la branche 5 étant articulés l'un à l'autre autour d'une broche sertie 9 qui est insérée selon la flèche F1 au travers des trous 4 et 7 alignés et est reçue dans un manchon 10 qui est inséré selon la flèche F2 au travers du trou débouchant 3.

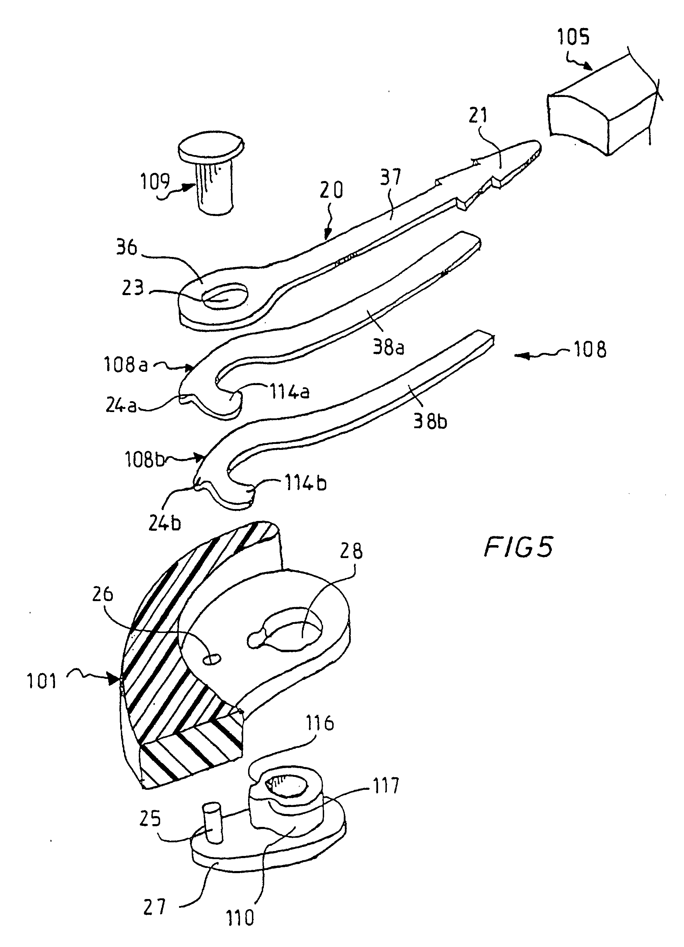

Tout mouvement du manchon 10 perpendiculairement au plan P est empêché par venue en prise de la broche 9 avec le manchon 10. Précisément, la broche 9 est emmanchée, puis sertie ou collée ou fixée d'une autre manière, dans le manchon 10. Il est bien entendu, toutefois, qu'une pièce de blocage pourrait, en variante, être insérée dans la broche 9, comme illustré, par exemple, en 29 à la figure 5. Dans tous les cas, l'homme du métier notera que l'assemblage obtenu peut être facilement démonté à l'aide d'un marteau et d'un "chasse-goupille", par exemple aux fins de remplacer une branche abîmée.

Tout mouvement en rotation du manchon 10 dans le plan P est empêché par la venue en prise des deux saillies, telles que 3a, avec deux évidements 16 et 17 ménagés dans la périphérie du manchon 10. Le nombre d'évidements et de saillies appariés n'est toutefois pas limitatif. Une autre fonction des évidements 16 et 17 apparaîtra plus loin. On comprend que l'ensemble broche 9 / pièce de blocage 29 tourne librement dans le manchon 10.

Si l'on se réfère toujours à la figure 1, on voit que la charnière selon l'invention comprend en outre des moyens élastiques 8 qui ont, dans cette forme d'exécution, une configuration sensiblement en Y, les branches 8a et 8b du Y ayant une section transversale sensiblement rectangulaire et présentant des protubérances respectives 14a et 14b au voisinage de leur extrémité libre. Les moyens élastiques 8 sont destinés à être reçus dans l'évidement 6 dont la périphérie a une forme analogue, mais des dimensions légèrement supérieures, à celles desdits moyens élastiques.

La charnière illustrée comprend en outre un capot de protection 11 qui a la forme d'une plaque adaptée à recouvrir entièrement les moyens élastiques 8 et qui est pourvue d'une ouverture 12 de plus grandes dimensions que la périphérie du manchon 10. Le capot 11 est destiné à être disposé au-dessus des moyens élastiques 8, sur un épaulement 13 ménagé dans l'évidement 6, de manière à dissimuler les moyens élastiques 8 à la vue et à les protéger de la poussière.

On comprend que, compte tenu de la configuration extraplate des moyens élastiques 8, dont la hauteur peut être de l'ordre de 0,4 mm, la branche 5, et partant de là le tenon 1, peuvent également avoir une dimension minimale en hauteur. On comprend également que la coopération entre, d'une part, le charnon 5a et les charnons 2a et 2b et, d'autre part, la broche 9 évite tout déboîtement de la charnière en cas d'application à celle-ci de contraintes inhabituelles.

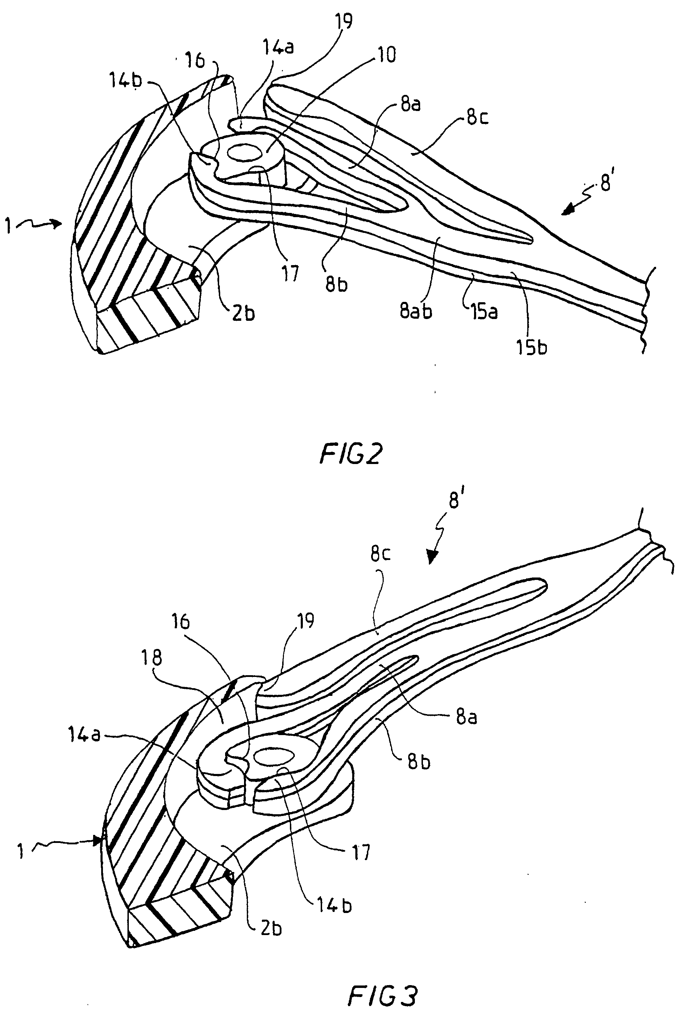

Les figures 2 à 4 illustrent une variante de la charnière représentée à la figure 1. Sur ces figures, les éléments de structure identiques à des éléments représentés à la figure 1 seront désignés par les mêmes chiffres de référence. Des éléments similaires seront désignés par les mêmes chiffres de référence suivis du signe prime.

Comme le montre la figure 2, cette forme d'exécution se distingue essentiellement de celle décrite par référence à la figure 1 en ce que les moyens élastiques 8' comprennent une partie 8c supplémentaire qui est d'un seul tenant avec l'extrémité commune 8ab des parties 8a et 8b. Les éléments non représentés de cette charnière, tels que la branche, le second charnon du tenon et la broche, ont sinon la même configuration que ceux illustrés à la figure 1. On comprend donc que, dans la réalité, les parties 8a et 8b des moyens élastiques ne sont pas appliquées contre le charnon 2a comme représenté, mais que le charnon 5a est interposé entre ces pièces.

Les parties 8a et 8b sont ajustées étroitement autour du manchon 10, éventuellement avec une contrainte initiale si l'on souhaite réduire au minimum le jeu entre le tenon 1 et la branche (non représentée) . Comme on le voit sur ces figures, une autre différence avec la variante illustrée à la figure 1 est que les moyens élastiques 8' sont formés de deux lames élastiques empilées, telles que 15a, 15b, sans que ce nombre soit limitatif. En fait, le nombre de lames élastiques empilées dépendra de la résistance aux contraintes que l'on souhaite conférer à la monture.

A la figure 2, la charnière selon l'invention est appliquée à une monture de lunettes dans laquelle les branches se trouvent en position fermée ou repliée. Dans cette position, la protubérance 14b s'étendant depuis l'extrémité libre de la partie 8b coopère avec l'évidement 16 défini dans la périphérie du manchon 10, de manière à assurer la stabilité de la branche, tandis que la protubérance 14a dépendant de la partie 8a est simplement en appui contre la périphérie extérieure du manchon 10. On observera par ailleurs que la partie 8c des moyens élastiques 8' n'est soumise à aucune contrainte.

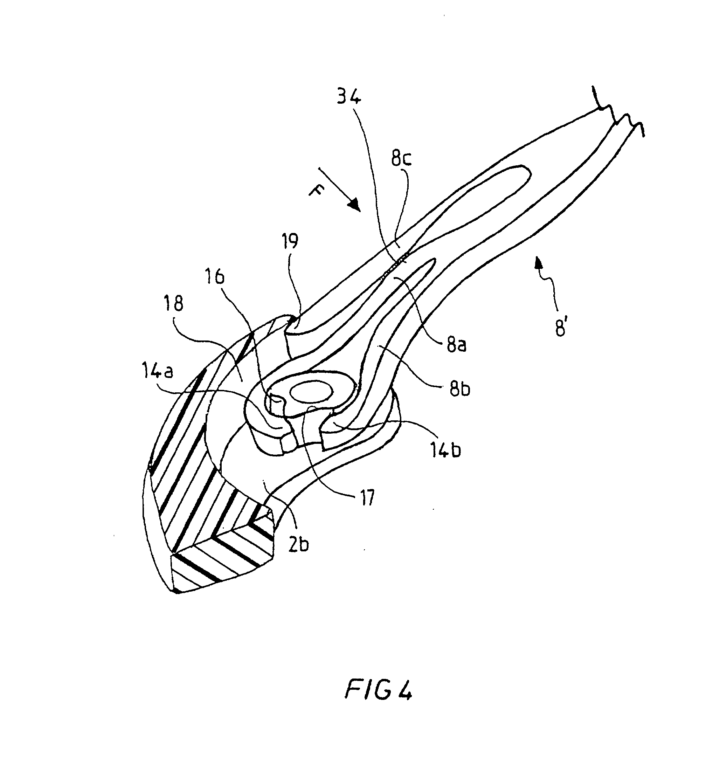

La figure 3 représente les mêmes éléments que précédemment, mais en position d'ouverture normale de la branche, c'est-à-dire une position dans laquelle la branche de lunettes (non représentée) forme sensiblement un angle de 93° avec la face avant de la monture (non représentée). La stabilité de cette position de la branche est cette fois assurée par la coopération respective des protubérances 14a et 14b, dépendant respectivement des parties 8a et 8b, avec les évidements 16 et 17, l'extrémité libre 19 de la partie 8c des moyens élastiques 8' se trouvant en butée contre la paroi intérieure 18 du tenon 1, sans toutefois que cette partie 8c se trouve soumise à une force de flexion.

A ce stade, le fonctionnement de cette charnière ne diffère pas de celui de la charnière représentée à la figure 1.

La figure 4 illustre un stade ultérieur d'ouverture de la branche, correspondant à une position, dite de sur-ouverture, dans laquelle la branche peut former un angle allant jusqu'à 120° avec la face avant de la monture. Dans cette position de sur-ouverture, les protubérances 14a, 14b et les évidements 16, 17 ne coopèrent plus mutuellement. De plus, l'extrémité 19 de la partie 8c des moyens élastiques 8' étant toujours en butée contre la paroi 18, du fait de la rotation supplémentaire imprimée à la branche par rapport à la position illustrée à la figure 3, la partie 8c se trouve à présent soumise à une force de flexion selon la flèche F qui la plaque en 34 contre la partie 8b. On comprend donc que l'amplitude de l'angle de sur-ouverture dépendra de la flexibilité des moyens élastiques 8'. Il est par ailleurs évident que la configuration représentée à la figure 4 correspond à une position instable de la branche de lunettes, laquelle aura tendance à revenir, sous l'effet de la force de rappel exercée par les moyens élastiques 8', jusqu'à la position illustrée à la figure 3.

Si l'on en vient maintenant à la figure 5, on voit une charnière selon une seconde forme d'exécution de l'invention, avant assemblage. Des chiffres de référence identiques, augmentés de 100, seront attribués aux éléments similaires à des éléments décrits en regard des figures 1 à 4.

La charnière représentée à la figure 5 comprend ainsi un tenon 101 et une branche de lunettes 105 qui sont destinés à être articulés l'un à l'autre autour d'une broche 109 adaptée à être reçue dans un manchon 110. Dans cette forme d'exécution, le charnon 36 de la branche 105 est réalisé dans l'une des extrémités d'une pièce élastique de liaison 20 ayant généralement la forme d'une lame de faible épaisseur. L'autre extrémité 21 de la pièce de liaison 20 est configurée en pointe de harpon de manière à pouvoir être insérée et maintenue par blocage dans la branche 105. L'extrémité 21 de la pièce de liaison 20 et la branche 105 peuvent ainsi être surmoulées, c'est-à-dire que la pièce 20 est placée dans le moule de fabrication de la branche avant injection dans ce moule de la matière plastique constituant la branche. En variante, la pièce 20 peut être insérée dans la branche 105 tandis que le matériau constituant la branche est porté à une température supérieure à sa température de ramollissement. La charnière comporte, en outre, comme moyens élastique 108, deux lames élastiques 108a et 108b, qui ont chacune sensiblement la forme d'un crochet plat de faible épaisseur, dont l'extrémité recourbée se termine par une protubérance 114a et 114b, respectivement, tournée vers l'intérieur du crochet, et présente une saillie 24a et 24b, respectivement, s'étendant depuis la courbure extérieure du crochet. La pièce de liaison 20 et les lames élastiques 108a, 108b sont empilées de façon à ce que l'ouverture 23 de la pièce de liaison 20 soit à l'aplomb de la zone inscrite dans l'extrémité recourbée en crochet des lames élastiques 108a, 108b et que les corps, respectivement 37, 38a et 38b, de ladite pièce et desdites lames soient superposés. Dans la variante illustrée, les crochets des lames élastiques 108a et 108b sont orientés dans le même sens ; toutefois, ils pourraient être orientés dans des directions opposées. La pièce de liaison 20 et les lames élastiques 108a et 108b forment ensemble les moyens élastiques de la charnière.

Dans cette forme d'exécution, le manchon 110 est solidaire d'une plaque support 27 depuis laquelle se projette en outre un plot cylindrique 25. La partie du tenon 101 formant charnon présente une ouverture 28 de forme appariée à celle du manchon et un trou traversant 26 d'un diamètre légèrement supérieur à celui du plot 25, de sorte que le manchon 110 et le plot 25 sont respectivement reçus dans l'ouverture 28 et le trou 26.

En position ouverte de la branche de lunettes, les protubérances 24a et 24b coopèrent avec le plot 25 qui forme butée. Dans cette position, les protubérances 114a et 114b sont ajustées dans l'évidement 117 ménagé dans la périphérie du manchon 110. La position fermée, ou repliée, stable de la branche est obtenue par coopération de ces mêmes protubérances 114a et 114b avec l'évidement 116 pratiqué dans la périphérie du manchon 110. Dans cette deuxième forme d'exécution de l'invention, la pièce de liaison 20 et les lames élastiques 108a et 108b ont de préférence des caractéristiques d'élasticité sensiblement identiques qui, comme cela ressort de la figure 5, détermineront l'amplitude maximale de sur-ouverture de la branche de lunettes, laquelle pourra atteindre une valeur de 90°.

Des essais mécaniques effectués sur une monture de lunettes équipée de la charnière décrite par référence à la figure 5 ont montré que la monture satisfaisait aux exigences de résistance imposées par les fabricants de lunettes pour enfants, en ce sens qu'elle résistait, sans rupture, à l'application d'une charge de 4,535 kg sur chaque branche, à une distance de 50,8 mm de l'axe de rotation de la charnière, jusqu'à faire pivoter la branche de 180°, dans le plan normal de l'articulation, par rapport à sa position repliée.

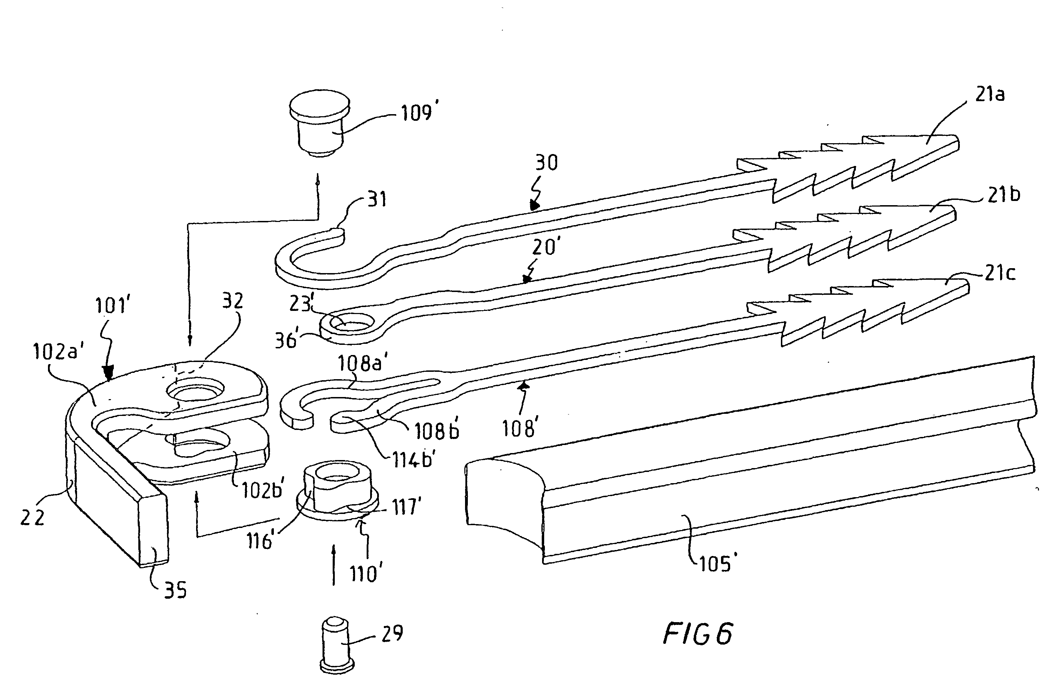

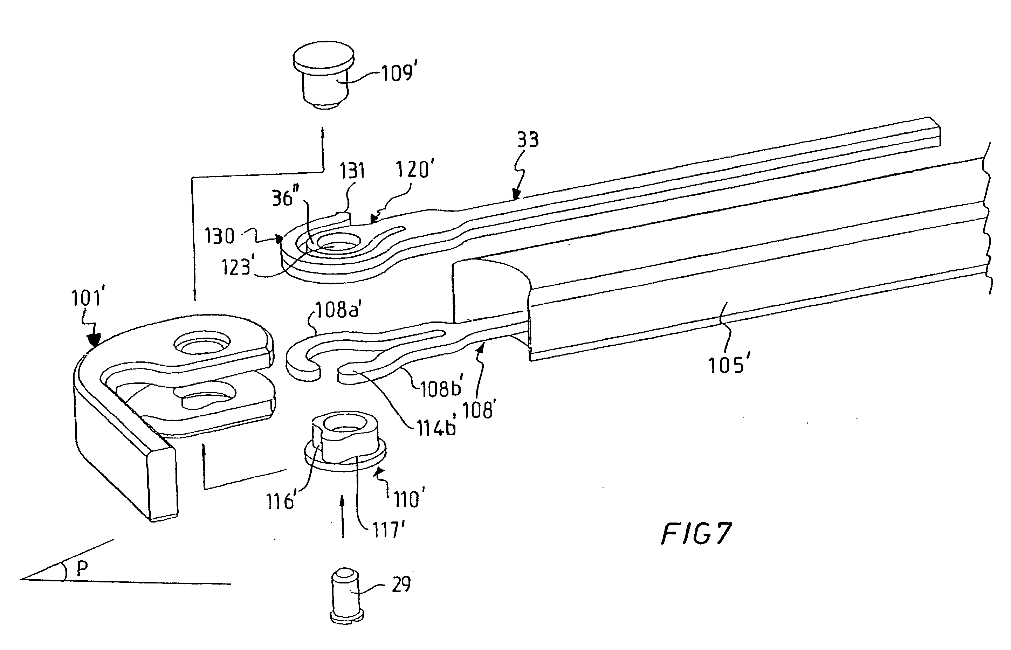

Deux variantes de la charnière illustrée à la figure 5 sont représentées sur les figures 6 et 7. Sur la figure 6, les éléments similaires à des éléments décrits par référence à la figure 5 seront désignés par les mêmes chiffres de référence, suivi du signe prime. Certains de ces éléments ne seront donc pas à nouveau décrits.

La variante de la figure 6 diffère essentiellement de celle de la figure 5 en ce sens que, d'une part, une lame élastique 108' unique est substituée aux lames élastiques 108a et 108b et que, d'autre part, elle intègre un élément de rappel séparé.

Plus précisément, les moyens élastiques représentés à la figure 6 comprennent une lame élastique de rappel 30 superposée à une pièce de liaison 20' et à une lame élastique 108' qui comportent toutes trois une extrémité en pointe de harpon 21a-c semblable à l'extrémité 21 de la pièce de liaison 20 représentée à la figure 5, extrémités au moyen desquelles elles sont maintenues fermement dans une branche de lunettes 105'.

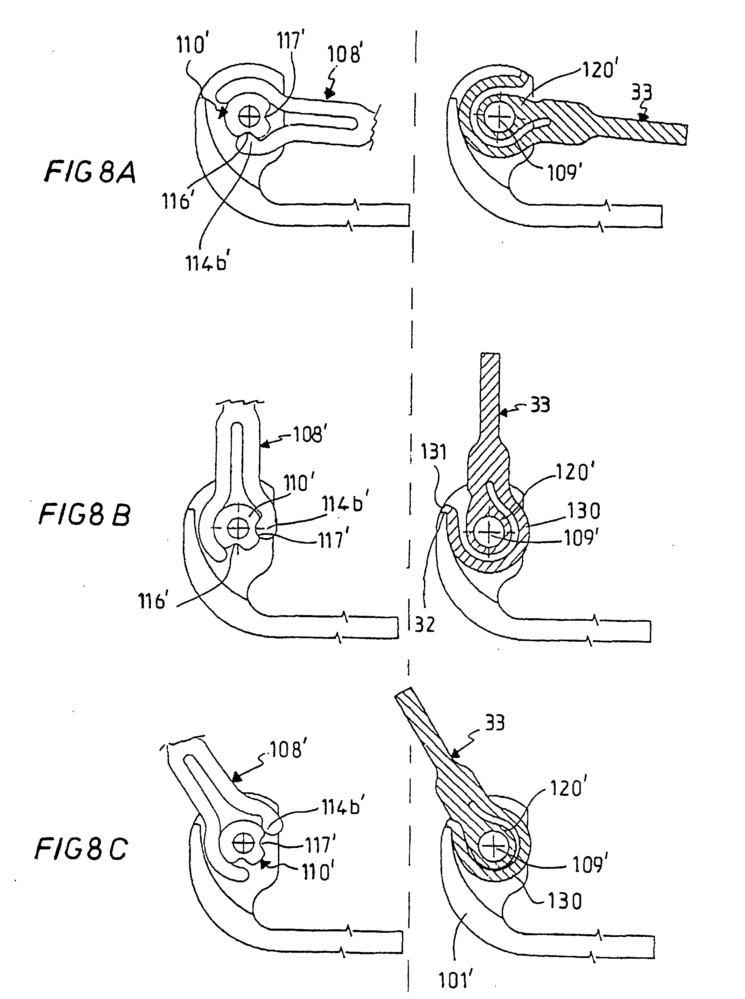

La lame élastique 108' présente, à l'opposé de l'extrémité 21c, une extrémité libre configurée en Y, comprenant deux branches 108a' et 108b', de manière analogue aux moyens élastiques 8 de la figure 1. Les parties 108a' et 108b' de la lame élastique 108' sont destinées à être ajustées autour de la périphérie d'un manchon 110' et à coopérer respectivement avec les évidements 116' et 117' ménagés dans celle-ci de manière identique à ce qui sera décrit par référence aux figures 8A à 8C.

A l'opposé de l'extrémité 21a, la lame de rappel 30 a une forme en crochet dont l'extrémité recourbée est retroussée, comme indiqué en 31.

Les charnons 102a' et 102b' du tenon 101' sont solidaires d'une paroi courbe 22 dont une extrémité 35 vient dans l'alignement de la face avant de la monture et dont l'autre extrémité 32, effilée, est sensiblement perpendiculaire à l'extrémité 35. En position d'ouverture outrepassée, ou sur-ouverture, de la branche 105', l'extrémité retroussée 31 de la lame de rappel 30 vient en butée contre la paroi 32 du tenon 101', de façon analogue à ce qui est illustré à la figure 8B.

On notera que, dans la forme d'exécution illustrée, il est prévu une pièce de blocage 29 qui vient en prise avec l'extrémité creuse en vis-à-vis de la broche 109'. Précisément, pour éviter tout mouvement du manchon 110' perpendiculairement au plan P la pièce 29 est emmanchée, puis sertie ou collée ou fixée d'une autre manière, dans la broche 109'.

La figure 7 illustre une variante de la charnière représentée à la figure 6. Sur cette figure, les éléments identiques à des éléments de la figure 6 seront identifiés par les mêmes chiffres de référence et ne seront pas décrits à nouveau, et des éléments similaires seront identifiés par les mêmes chiffres de référence, augmentés de 100.

La charnière représentée à la figure 7 se différencie essentiellement de celle illustrée à la figure 6 par le fait que la pièce de liaison 20' et la lame élastique de rappel 30 de la figure 6 sont remplacées par une seule lame de liaison et de rappel 33, destinée à être superposée à la lame élastique 108' et emmanchée à force dans une branche de lunettes 105'. L'extrémité libre de la lame de liaison et de rappel 33 comprend deux parties distinctes, d'un seul tenant, qui forment respectivement pièce de liaison 120' et lame de rappel 130. De manière analogue à la figure 6, la partie formant pièce de liaison 120' est pourvue d'une ouverture circulaire 123' tandis que la partie formant lame de rappel 130 a la forme d'un crochet dont l'extrémité recourbée 131 est retroussée.

Les figures 8A à 8C illustrent le fonctionnement de la charnière de la figure 7, avec mise en parallèle, à gauche, de vues prises dans un plan parallèle au plan d'articulation et intermédiaire entre la lame élastique 108' et la lame de liaison et de rappel 33 et, à droite, de vues prises dans un plan parallèle au plan d'articulation et dans lequel se trouve ladite lame de liaison et de rappel 33 vue en coupe.

Comme le montre la figure 8A, en position fermée de la branche de lunettes (non représentée), la protubérance 114b' prévue sur la lame élastique 108' est reçue dans l'évidement 116' ménagé dans la périphérie du manchon 110' et la lame de liaison et de rappel 33 n'est soumise à aucune contrainte.

Tandis que l'on amène la branche jusqu'en position d'ouverture normale, la protubérance 114b' vient en prise avec l'autre évidement 117' ménagé dans le manchon 110' et, dans le même temps, la partie formant pièce de liaison 120' de la lame de liaison et de rappel 33 tourne autour de la broche 109', jusqu'à ce que l'extrémité retroussée 131 de la partie formant lame de rappel 130 de la lame de liaison et de rappel 33 vienne en butée contre l'extrémité 32 du tenon, comme illustré à la figure 8B.

On comprend donc que les positions représentées sur ces figures correspondent à des positions stables de la branche de lunettes par rapport au tenon.

Si l'on ouvre davantage la branche jusqu'à la position de sur-ouverture illustrée à la figure 8C, la protubérance 114b' sort de l'évidement 117', de sorte que les extrémités de la lame élastique 108' reposent simplement contre la périphérie du manchon 110' : la position ainsi définie est instable. Simultanément, puisque l'on a poursuivi la rotation de la partie formant pièce de liaison 120' autour de la broche 109' alors que la partie formant lame de rappel 130 était en butée contre le tenon 101', les deux parties de la lame de liaison et de rappel 33 sont venues en butée l'une contre l'autre et ont été déformées dans la limite de leurs élasticités. On comprend donc que la position illustrée à la figure 8C est une position d'ouverture outrepassée maximale, correspondant à un angle de sur-ouverture d'environ 45°, voire plus, dans laquelle la lame de liaison et de rappel 33 a tendance à revenir à son état non déformé représenté à la figure 8B et à exercer ainsi un effet de rappel sur la branche de lunettes.

La forme d'exécution illustrée sur les figures 5 à 7 a pour avantage, par rapport à celle représentée sur les figures 1 à 4, que la branche de lunettes peut être constituée de plastique puisqu'elle ne définit pas de passage pour la broche, cette fonction étant assurée par la pièce de liaison.

Il est bien entendu que la description précédente n'est donnée qu'à titre d'exemple et que différentes modifications pourraient lui être apportées sans sortir du cadre de l'invention. Par exemple, les charnières illustrées sur les figures 5 à 7 pourraient, de manière analogue à celle représentée sur les figures 2 à 4, comprendre des éléments élastiques qui sont chacun constitués d'un empilement de deux lames élastiques ou davantage.

Comme cela ressort de la description précédente, la charnière élastique selon l'invention, appliquée à une monture de lunettes, offre donc un encombrement minimal, particulièrement en hauteur, et présente toutefois une bonne résistance aux contraintes, qui lui sont éventuellement appliquées dans plusieurs plans. On notera en outre que, dans toutes les formes d'exécution de l'invention, la configuration particulière des moyens élastiques rend superflue l'utilisation de vis de fixation et de réglage. Une vis pourrait néanmoins être utilisée à la place de la pièce de blocage 29 des figures 6 et 7 si on le souhaite.

Bien entendu, les remarques précédentes valent encore pour les autres applications de la charnière selon l'invention, dans lesquelles la branche et le tenon précédemment décrits sont remplacés par d'autres parties d'éléments rigides à articuler, tels qu'une porte et un dormant.

## Revendications

1. Charnière comprenant un premier élément rigide (5 ; 105 ; 105') monté pivotant, autour d'une broche (9 ; 109 ; 109'), sur un second élément rigide (1 ; 101 ; 101'), ledit premier élément (5 ; 105 ; 105') renfermant des moyens élastiques (8 ; 8' ; 20, 108 ; 30,20',108' ; 33), constitués par au moins une lame élastique, qui sont adaptés à coopérer avec un élément à surface de came (10 ; 110 ; 110') solidaire dudit second élément (1 ; 101 ; 101'), ou d'un seul tenant avec celui-ci, pour définir des positions angulaires relatives stables desdits éléments rigides **caractérisée en ce que**
une extrémité dudit premier élément rigide (5 ; 105 ; 105') est reliée à, ou constituée par, une partie formant charnon (6 ; 36 ; 36' ; 36") qui est insérée entre une paire de charnons (2a,2b ; 102a ; 102a',102b') formant l'extrémité dudit second élément rigide (1 ; 101 ; 101') avec enfilage de ladite broche (9 ; 109 ; 109') dans l'ensemble desdits charnons, un manchon (10 ; 110 ; 110') étant interposé entre un charnon (2a ; 102a ; 102a',102b') dudit second élément rigide (1 ; 101 ; 101') et ladite broche (9 ; 109 ; 109'), lequel manchon (10 ; 110 ; 110') définit, d'une part, un passage cylindrique adapté à recevoir ladite broche (9 ; 109 ; 109') et, d'autre part, une surface périphérique extérieure constituant ladite surface de came et contre laquelle au moins une partie desdits moyens élastiques, dite "partie enserrante"
(8a,8b ; 108a,108b ; 108a',108b'), est adaptée à être ajustée
et **en ce que** ladite au moins une lame élastique est orientée de telle manière que sa dimension la plus petite, en section transversale, s'étend dans un plan perpendiculaire au plan normal d'articulation (P) des deux éléments rigides.

2. Charnière selon la revendication 1, **caractérisée en ce que** ladite surface de came présente au moins un évidement (16,17 ; 116,117 ; 116',117') adapté à coopérer avec au moins une protubérance appariée (14a,14b ; 114a,114b ; 114a',114b') prévue à une extrémité de ladite partie enserrante (8a,8b ; 108a,108b ; 108a',108b') desdits moyens élastiques.

3. Charnière selon la revendication 1 ou 2, **caractérisée en ce que** ladite partie formant charnon (36 ; 36' ; 36") dudit premier élément rigide est constituée par une autre partie, dite "partie encerclante" (20 ; 20' ; 120'), formée d'un seul tenant avec lesdits moyens élastiques.

4. Charnière selon l'une quelconque des revendications 1 à 3, **caractérisée en ce que** ladite partie enserrante (8 ; 8' ; 108') desdits moyens élastiques a sensiblement la forme d'un Y.

5. Charnière selon l'une quelconque des revendications 1 à 3, **caractérisée en ce que** ladite partie enserrante (108) desdits moyens élastiques a sensiblement la forme d'un crochet plat.

6. Charnière selon l'une des revendications 3 à 5, **caractérisée en ce que** lesdits moyens élastiques comprennent en outre un élément de rappel (30) en forme de crochet plat, présentant une extrémité ouverte retroussée (31) adaptée à venir en butée élastique contre ledit second élément rigide (101'), et qui est superposé à ladite partie encerclante (36') desdits moyens élastiques.

7. Charnière selon l'une des revendications 3 à 5, **caractérisée en ce que** ladite partie encerclante (36") desdits moyens élastiques est partiellement entourée, dans le plan normal d'articulation (P), d'une portion extérieure (130) en forme de crochet, présentant une extrémité ouverte retroussée (131) adaptée à venir en butée élastique contre ledit second élément rigide (101').

8. Charnière selon la revendication 1, dans laquelle ladite partie formant charnon est constituée par une extrémité (5a) dudit premier élément rigide (5 ; 105 ; 105'), **caractérisée en ce que** lesdits moyens élastiques (8) ont sensiblement la forme d'un Y dont les deux branches (8a,8b) forment ladite partie enserrante desdits moyens élastiques.

9. Charnière selon la revendication 8, **caractérisée en ce que** lesdits moyens élastiques (8') comprennent en outre une troisième branche (8c), d'un seul tenant avec lesdites deux branches (8a,8b) et adjacente à celles-ci dans ledit plan normal d'articulation (P), laquelle troisième branche (8c) est adaptée à venir en butée élastique contre ledit second élément rigide (1).

10. Charnière selon l'une quelconque des revendications précédentes, **caractérisée en ce que** lesdits moyens élastiques (8') sont formés de plusieurs lames élastiques superposées (15a, 15b).

11. Charnière selon l'une quelconque des revendications précédentes, **caractérisée en ce que** ladite plus petite dimension de ladite lame élastique est d'environ 0,4 mm.

12. Monture de lunettes comprenant une charnière selon l'une quelconque des revendications précédentes, dans laquelle l'un desdits éléments rigides est monté sur, ou constitué par, une branche de lunettes (5 ; 105 ; 105') et l'autre desdits éléments rigides est une pièce rigide (1 ; 101 ; 101') solidaire de la face avant de ladite monture de lunettes.

13. Porte et bâti articulés l'un sur l'autre au moyen d'au moins une charnière selon l'une quelconque des revendications 1 à 11.

## Claims

1. Hinge comprising a first rigid part (5; 105; 105') mounted so as to pivot about a pin (9; 109; 109') on a second rigid part (1; 101; 101'), which first part (5; 105; 105') contains spring means (8; 8'; 20, 108; 30, 20', 108'; 33) that consist of at least one leaf spring and are such as to engage with a part having a cam surface (10; 110; 110') fixed to the said second part (1; 101; 101'), or made in one piece with it, in order to define stable relative angular positions of the said rigid parts, the hinge being **characterized**
**in that** one end of the said first rigid part (5; 105; 105') is connected to, or consists of, a portion forming a knuckle (6; 36; 36'; 36") which is inserted between a pair of knuckles (2a, 2b; 102a; 102a', 102b') that form the end of the said second rigid part (1; 101; 101'), with the said pin (9; 109; 109') being inserted through all these knuckles, while a bush (10; 110; 110') is interposed between one knuckle (2a; 102a; 102a', 102b') of the said second rigid part (1; 101; 101') and the said pin (9; 109; 109'), which bush (10; 110; 110') defines both a cylindrical passage in which to accommodate the said pin (9; 109; 109') and an external peripheral surface constituting the said cam surface and against which at least a portion, termed the "clamping portion" (8a, 8b; 108a, 108b; 108a', 108b'), of the said spring means is designed to fit
and **in that** the said at least one leaf spring is oriented in such a way that its smallest dimension, in cross section, extends in a plane perpendicular to the normal plane of articulation (P) of the two rigid parts.

2. Hinge according to Claim 1, **characterized in that** the said cam surface includes at least one recess (16, 17; 116, 117; 116', 117') which is such as to engage with at least one matching protuberance (14a, 14b; 114a, 114b; 114a', 114b') provided on one end of the said clamping portion (8a, 8b; 108a, 108b; 108a', 108b') of the said spring means.

3. Hinge according to Claim 1 or 2, **characterized in that** the said knuckle portion (36; 36'; 36") of the said first rigid part is formed by another portion, termed the "encircling portion" (20; 20'; 120'), made in one piece with said spring means.

4. Hinge according to any one of Claims 1 to 3, **characterized in that** the said clamping portion (8; 8'; 108') of the said spring means is in the general shape of a Y.

5. Hinge according to any one of Claims 1 to 3, **characterized in that** the said clamping portion (108) of the said spring means is in the general shape of a flat hook.

6. Hinge according to one of Claims 3 to 5, **characterized in that** the said spring means also include a return part (30) shaped like a flat hook having a bent-out open tip (31) such as to abut elastically against the said second rigid part (101'), the said return part (30) being placed on top of the said encircling portion (36') of the said spring means.

7. Hinge according to one of Claims 3 to 5, **characterized in that** the said encircling portion (36") of the said spring means is partly surrounded, in the normal plane of articulation (P), by an external portion (130) shaped like a hook having a bent-out open tip (131) such as to abut elastically against the said second rigid part (101').

8. Hinge according to Claim 1, in which the said knuckle portion is formed by one end (5a) of the said first rigid part (5; 105; 105'), **characterized in that** the said spring means (8) are in the general shape of a Y whose two arms (8a, 8b) form the said clamping portion of the said spring means.

9. Hinge according to Claim 8, **characterized in that** the said spring means (8') also include a third arm (8c), made in one piece with the said two arms (8a, 8b) and adjacent to these in the said normal plane of articulation (P), which third arm (8c) is such as to abut elastically against the said second rigid part (1).

10. Hinge according to any one of the previous claims, **characterized in that** the said spring means (8') are composed of several superimposed leaf springs (15a, 15b).

11. Hinge according to any one of the previous claims, **characterized in that** the said smallest dimension of the said leaf spring is approximately 0.4 mm.

12. Spectacle frame including a hinge according to any one of the previous claims, in which one of the said rigid parts is mounted on, or consists of, a spectacle sidepiece (5; 105; 105') and the other of the said rigid parts is a rigid component (1; 101; 101') integral with the front face of the said spectacle frame.

13. Door hinged to a door frame by means of at least one hinge according to any one of Claims 1 to 11.

## Patentansprüche

1. Scharnier, umfassend ein erstes starres Element (5; 105; 105'), das verschwenkbar um einen Zapfen (9; 109; 109') auf einem zweiten starren Element (1**;** 101; 101') montiert ist, wobei das erste Element (5; 105; 145') elastische Mittel (8, 8', 20; 108; 30,20',108';33) einschleißt, die aus mindestens einem elastischen Blatt bestehen und die dafür ausgelegt sind, mit einem Nockenflächenelement (10; 110; 110' ) , das mit dem zweiten Element (1; 101**;** 101') fest verbunden ist oder mit diesem einstückig ausgeführt ist, zusammenzuwirken, um stabile Relativwinkelstellungen dieser starren Elemente zu bilden, **dadurch gekennzeichnet, dass** ein Ende des ersten starren Elements (5; 105; 105') mit einem ein Scharnierglied bildenden Teil (6; 36; 36'; 36") verbunden ist oder von diesem gebildet ist, das zwischen ein Paar von Scharniergliedern (2a,2b; 102a; 102a',102b') eingesetzt ist, die das Ende des zweiten starren Elements (1; 101; 102' ) bilden, wobei der Zapfen (9; 109; 109' ) in die Gesamtheit diessr Scharnierglieder eingesteckt ist, wobei eine Buchse (10; 110; 110') zwischen ein Scharnierglied (2a; 102a; 102a',102b') des zweiten etarren Elements (1, 101; 101') und den Zapfen (9; 109, 109') eingesetzt ist, wobei diese Buchse (10; 110; 110') einerseits einen zylindrischen Durchgang, der zur Aufnahme des Zapfens (9; 109; 109' ) ausgelegt ist, und andererseits eine äußere Umfangsfläche bildet, die diese Nockenoberfläche bildet und an die mindestens ein Teil der elastischen Mittel, "einklemmender Teil" (8a,8b; 108a,108b; 108a',108b') genannt, angepasst werden kann,
und dass das mindestens eine elastische Blatt so ausgerichtet ist, dass seine kleinste Querschnittsabmessung sich in einer zur Normalgelenkebene (P) der beiden starren Elemente senkrechten Ebene erstreckt.

2. Scharnier nach Anspruch 1, **dadurch gekennzeichnet, dass** die Nockenfläche mindestens eine Aussparung (16,17; 116, 117; 116' ,117' ) aufweist, die dafür ausgelegt ist, mit mindestens einer zugeordneten Erhebung (14a, 14b, 111a, 111b; 114a',114b') zusammenzuwirken, die an einem Ende des einklemmenden Teils (8a, 8b; 108a,108b; 108a' ,108b' ) der elastischen Mittel vorgesehen ist.

3. Scharnier nach Anspruch 1 oder 2, **dadurch gekennzeichnet, dass** der ein Scharnierglied (36; 36', 36") des ersten starren Elements bildende Teil aus einem anderen Teil, "einschließender Teil" (20; 20' ; 120' ) genannt, besteht, der mit den elastischen Mitteln einstückig ausgeführt ist.

4. Scharnier nach einem der Ansprüche 1 bis 3, **dadurch gekennzeichnet, dass** der einklemmende Teil (8; 8'; 108') der elastischen Mittel im wesentlichen die Form eines Y hat.

5. Scharnier nach einem der Ansprüche 1 bis 3, **dadurch gekennzeichnet, dass** der einklemmende Teil (108) der elastischen Mitte1 im wesentlichen die Form eines flachen Hakens hat.

6. Scharnier nach einem der Ansprüche 3 bis 5, **dadurch gekennzeichnet, dass** die elastischen Mittel außerdem ein Rückholelement (30) in Form eines flachen IIakens umfassen, der ein aufgebogenes offenes Ende (31) aufweist, das dafür ausgelegt ist, an dem zweiten starren Element (101') in elastischen Anschlag zu kommen, und das demm einschließenden Teil (36') der elastischen Mittel überlagert ist.

7. Scharnier nach einem der Ansprüche 3 bis 5, **dadurch gekennzeichnet, dass** der einschließende Teil (36") der elastischen Mittel in der Normalgelenkebene (P) teilweise von einem äußeren hakenförmigen Teil (130) umgeben ist, der ein aufgebogenes offenes Ende (131) aufweist, das dafür ausgelegt ist, an dem zweiten starren Element (101') in elastischen Anschlag zu kommen.

8. Scharnier nach Anspruch 1, bei dem der ein Scharnierglied bildende Teil von einem Ende (5a) des ersten starren Elements (5; 105; 105') gebildet ist, **dadurch gekennzeichnet, dass** die elastischen Mittel (8) im wesentlichen die Form eines Y haben, dessen beide Schenkel (8a, 8b) den einklemmenden Teil der elastischen Mittel bilden.

9. Scharnier nach Anspruch 8, **dadurch gekennzeichnet, dass** die elastischen Mittel (8') außerdem einen dritten Schenkel (8c) aufweisen, der mit den beiden Schenkeln (8a,8b) einstückig ausgeführt ist und in der Normalgelenkebene (P) neben diesen angeordnet ist, wobei dieser dritte Schenkel (8c) dafür ausgelegt ist, an dem zweiten starren Element (1) in elastischen Anschlag zu kommen.

10. Scharnier nach einem der vorhergehenden Ansprüche, **dadurch gekennzeichnet, dass** die elastischen Mittel (8') von mehreren übereinander angeordneten elastischen Blättern (15a,15b) gebildet sind.

11. Scharnier nach einem der vorhergehenden Anspruche, **dadurch gekennzeichnet, dass** die kleinete Abmessung des elastischen Blatts etwa 0,4 mm beträgt.

12. Brillengestell mit einem Scharnier nach einem der vorhergehenden Ansprüche, bei dem eines der starren Elemente auf einem Brillenbügel (5; 105; 105') montiert oder von diesem gebildet ist und das andere der starren Elemente ein mit dem Frontteil des Brillengestells fest verbundenes starres Teil (1, 101; 101' ist.

13. Tür und Rahmen, die mit Hilfe mindestens eines Scharniers nach einem der Ansprüche 1 bis 11 aneinander angelenkt sind.
